(19) **Europäisches Patentamt / European Patent Office / Office européen des brevets**

(11) **EP 3 683 634 B1**

(12) **EUROPEAN PATENT SPECIFICATION**

(45) Date of publication and mention
of the grant of the patent:
**20.07.2022 Bulletin 2022/29**

(21) Application number: **19461503.5**

(22) Date of filing: **15.01.2019**

(51) International Patent Classification (IPC):
**G05B 6/02** *(2006.01)*    **G05B 11/36** *(2006.01)*

(52) Cooperative Patent Classification (CPC):
**G05B 11/36; G05B 6/02**

(54) **A METHOD FOR CONTROLLING A TECHNOLOGICAL PROCESS**

VERFAHREN ZUR STEUERUNG EINES TECHNOLOGISCHEN PROZESSES

PROCÉDÉ DE COMMANDE D'UN PROCESSUS TECHNOLOGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.07.2020 Bulletin 2020/30**

(73) Proprietor: **Polski Koncern Naftowy Orlen S.A.
09-411 Plock (PL)**

(72) Inventor: **Pater, Lukasz
09-472 Cekanowo (PL)**

(74) Representative: **Bartula-Toch, Marta
Kancelaria Prawno-Patentowa Patent
Krzeslawicka 3A
31-416 Kraków (PL)**

(56) References cited:
**US-A- 4 349 869      US-A1- 2003 199 997
US-A1- 2007 073 422**

• **ERANDA HARINATH ET AL: "Design and tuning
of standard additive model based fuzzy PID
controllers for multi-variable process systems",
PROCEEDINGS OF THE 46TH IEEE
CONFERENCE ON DECISION AND CONTROL :
NEW ORLEANS, LA, 12 - 14 DECEMBER 2007,
IEEE, PISCATAWAY, NJ, USA, 1 December 2007
(2007-12-01), pages 5306-5311, XP031205039,
ISBN: 978-1-4244-1497-0**

**Description**

The invention relates to a method for controlling a technological process, implemented in a system intended for this purpose (e.g. an industrial plant, a production line, etc.), characterised by dependently controlled variables CV, with each depending on one or more independent manipulated variables MV. Said technological process may be any manufacturing or processing process, in particular a chemical process, such as e.g. cracked petrol desulfurization process.

**Prior art**

As regards prior art, two major solutions in the field of controlling technological processes should be highlighted: model predictive control (MPC) and proportional integral derivative (PID). Each of these solutions is briefly discussed below.

**MPC control**

Model predictive controls (MPC), belonging to the APC (Advanced Process Control) techniques are known and commonly used in industry. There are two leading suppliers of industrial software that implements this control method: the **Honeywell** company with "ProfitSuite - Proft Controller" software, the control algorithm: RMPCT (Robust Multivariable Predictive Control Technology), described e.g. in the US application no. US5572420A entitled "Method of optimal controller design for multivariable predictive control utilizing range control" or in the US application no. US5351184A entitled "Method of multivariable predictive control utilizing range control" and the **AspenTech** company with "DMCPlus" software - an algorithm called DMCplus (Dynamic Matrix Control).

Predictive control consists in the use of response (transmittance) models of an industrial plant to be controlled for directly identifying the optimal operating point of this plant, and then for bringing the whole process to this point using manipulated variables MV. If response models are used to control the technological process implemented in this plant that perfectly reflect the behaviour of the real system, the performance of such controller will be close to optimal. Theoretically, it is impossible to establish a more efficient control.

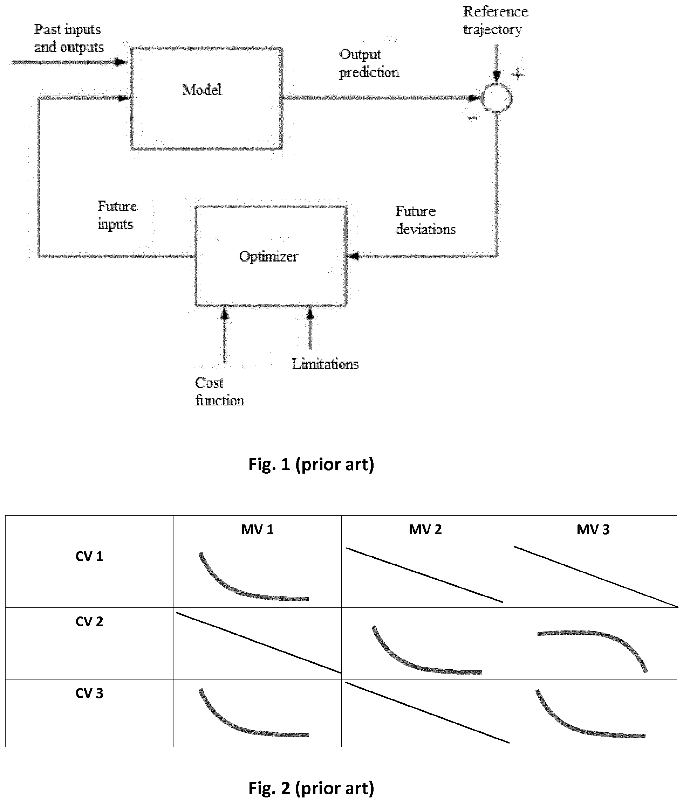

The MPC technique control is performed as shown in Fig.1 - prior art:

- the MPC controller retrieves the current values of the controlled variables CV (inputs) and manipulated variables MV (outputs);
- the control algorithm (e.g. RMPCT, DMCPlus), using process models and the calculated process optimal point calculates the output - i.e. new MV values and sends them via OPC (OLE for Process Control) to DCS (Distributed Control System) which directs the setpoints directly to valve transducers;
- the control algorithm verifies by how much the CV prediction differs from the actual value (deviations or control errors);
- the optimizer in the control algorithm, taking into account CV weights and limits (constraints), determines the objective - the optimal point of system operation;
- the loop closes when the calculated optimal operating point is recalculated against the model into new MV setpoint values.

The controlling quality in the MPC technique highly depends on the system models used, which describe the controlled process (Fig. 2 - prior art). Incorrectly determined models, which do not accurately describes the system behaviour, leads to incorrect determination of the optimal operating point of the plant. This results in oscillation, as the MPC control is unable to calculate the correct optimal operating point, constantly exceeding the limits.

Designing control models requires performing tests (step-tests) on the controlled system. They consist in conducting a series of temporal alterations in key parameters of CV variables and observing the response of the plant. This results in a temporary loss of production quality and efficiency, so that such alterations need to be agreed in advance with persons who are responsible for production. In addition, it is necessary to ensure that no effects of other changes (e.g. disturbances from adjacent systems or major weather changes) interfere with the response of the plant.

In practice, it is very difficult and time-consuming to determine the ideal models. All effects that affect the change of key parameters need to be taken into account. Moreover, the models degenerate over time, as the controlled system often changes its characteristics. This means that the tests and modelling need to be repeated (in practice every 6-12 months). If incorrect control models remain in the MPC, this may lead to oscillation.

Individual MPC implementations, produced by, for example, aforementioned leading companies, comprise a number of improvements and solutions to said problems, but they cannot eliminate these problems altogether. This further increases the complexity of the software itself, which adversely affects its reliability and stability.

**PID control**

The standard PID (Proportional Integral Derivative) algorithm is commonly used in every plant in the DCS basic control layer. It functions as a control loop only comprising a pair of variables: OP (Output, corresponding to MV in the MPC control) - the manipulated variable and the measured process value PV (Process Variable, corresponding to CV in the MPC control) with its desired SP (Setpoint) value.

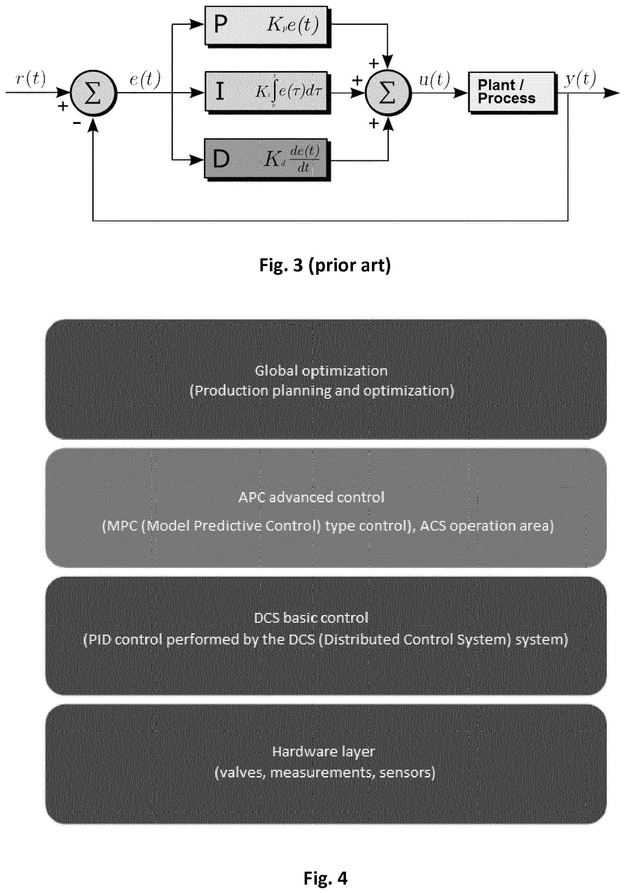

The concept of the PID control loop is shown in Fig. 3 - prior art:

- the controller retrieves the current setpoints of a single process variable PV and the difference between the desired value SP-PV (deviation or control error);
- the controller sequentially calculates the following components: P (potentiation component), I (integral component), D (differential component) and sums them up, thus establishing a new setpoint;
- the controller calculates the difference between SP-PV and returns it to the controller.

US invention application no. US20180143595A1 discloses a concept similar to the current solution, as it relates to the control of two/three process parameters by affecting one regulated variable. This publication, however, provides no hints as to the manner of selecting one of several controllable variables.

US application no. US20070073422A1 discloses a method to automatically tune control systems, which comprises a user choosing constraints and limits to automatically tune a PID controller with a matrix of its parameters.

The disadvantage of the control using the standard PID controller is its dependence on a single process variable PV alone. This problem is particularly tangible in complex systems where a change in a single OP setpoint triggers the response of several different process variables. In industrial systems, the standard procedure in such cases is to use complex cascades of PID controllers, where the output from one controller is the input of the next one or manual selection of currently operating controllers from the list of available ones. This results in a large increase in the complexity of such control systems as well as in maintenance problems and a lack of flexibility.

## Invention - ACS control

Therefore, the object of the present invention is to propose a method for controlling the technological process free of the disadvantages listed above.

The present invention discloses an advanced control system abbreviated as ACS (Advanced Control System), which dynamically optimizes the efficiency of the technological process (e.g. production), depending on technological and financial constraints. It is a member of the class of APC systems which do not use system response models for controlling. The system was designed with particular emphasis on process autonomy, long term operation stability and safety of the implemented process.

The invention is set out in the appended set of claims 1-13.

The architecture of the ACS solution is a layered architecture, typical of industrial control systems, illustrated in Fig. 4.

ACS belongs to the advanced process control family that cooperates with an existing DCS system. In each iteration, it solves the problem of optimal control in systems with multiple variables with constraints. Such systems consist of independent manipulated variables (MVs) which affect the controlled variables (CVs). MV variables relate to operation components of the controlled plant, e.g. valves. CV variables usually include measurements of e.g. temperature or quality parameters. Individual CV and MV variables are not necessarily scalar values. In particular, these may be vector quantities.

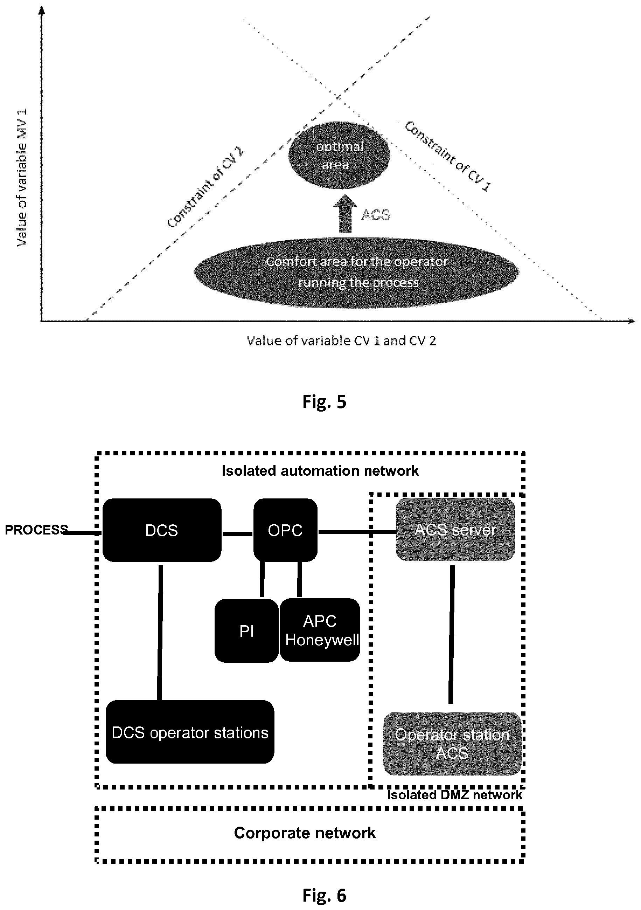

Advanced control is consists in selecting the setpoints of MV variables so as to maintain the values of CV variables at a certain optimal level determined by the imposed limits. This is shown as a diagram in Fig. 5.

Limits are usually technical constraints of the controlled system, e.g. maximum flow through the valve, maximum temperatures.

The (human) operator running the process is unable to react quickly enough to the slightest changes in the momentary operation point of the plant, which leads to increase of the oscillation of key parameters of CV variables. The operator is then forced to maintain a greater distance from the optimal point.

By real-time adjusting the setpoints of MV variables, advanced control applications reduce the level of standard deviation of CV variables. This allows for moving the operating point of the plant to an area closer to the limits. The size of this movement determines the profit thus generated. The role of the operator is only to define - using limits - a safe area of optimal operation. The ongoing bringing of the process to this area is the task of advanced control algorithms.

## Hardware architecture

The hardware architecture of the ACS solution corresponds to that of commercial APC solutions (e.g. by Honeywell, Aspen) and it is schematically shown in Fig. 6.

The ACS server retrieves values and sends setpoints via the OPC server, which is a standard part of any major DCS industrial automation system by any manufacturer. It is designed to mediate communication with other systems by providing them with access to process data. A PI client (corporate real-time process database), e.g. by OSISoft or APC by Honeywell can be connected to the OPC server.

The ACS can be operated and monitored from a separate (PC class) computer, which is an ACS operator station. It allows the operator to introduce limit changes and turn ACS controllers on [*and*] off.

The invention comprises a method for controlling a technological process characterised by dependent controlled variables, $CV_i$ ($i \geq 1$), each of which depends on one or more independent manipulated variables $MV_j$ ($j \geq 1$), with the relationships between each pair of $CV_i$ and

MV$_j$ variables being included in the ACS, Advanced Control System, dependency matrix as separate proportional-integral-derivative controls PID$_{ij}$, including the following steps:

a) Retrieving the current $r(t)$ values, $r(t)$ being the desired process value or setpoint (SP), of dependent controlled variables CV$_i$ and independent manipulated variables, MV$_j$;

b) For each independent manipulated variable, MV$_j$, selecting a specific dependent controlled variable, CV$_m$ for control and limit SP$_m$ of said dependent controlled variable, CV$_m$, , wherein in this step the following operations are performed:

b1) For each dependent controlled variable, CV$_i$ and independent manipulated variable, MV$_j$, their limits are retrieved from the limit database;

b2) For each dependent controlled variable, CV$_i$ its strategy is retrieved from the strategy database, wherein the strategy may be one of the following three acceptable strategies:

i. An upper limit (UP) strategy, which consists in maintaining the value of the dependent controlled variable, CV$_i$ below or equal to the upper limit CV$_{i\_limit}$;

ii. A lower limit (DOWN) strategy, which consists in maintaining the value of the dependent controlled variable, CV$_i$ below or equal to the lower limit CV$_{i\_limit}$;

iii. A between-limit (BETWEEN) strategy, which consists in maintaining the value of the dependent controlled variable, CV$_i$ between the upper and lower limits;

b3) For each controlled variable, CV$_i$ and each limit thereof, the value of the DTLR$_{CVi}$, Distance To Limit Ratio, coefficient is calculated, defined as:

$$DTLR_{CVi} = \frac{|CV_i - CV_{i\_limit}|}{CV_{i\_limit}}$$

where:

DTLR$_{CVi}$ - the Distance To Limit Ratio DTLR value for a single dependent controlled variable CV$_i$ and the limit thereof CV$_{i\_limit}$;

CV$_i$ - denotes the current value of a single dependent controlled variable CV$_i$;

CV$_{i\_limit}$ - denotes the current value of the upper or lower limit for said dependent controlled variable CV$_i$;

c) Calculating the adjustment deviation between the current value of the selected dependent controlled

CV$_m$ and its limit SP$_m$;

d) Selecting from a ACS dependency matrix a proportional-integral-derivative controller, PID$_{mj}$ corresponding to the pair of variables selected in step b): dependent controlled CV$_m$ and independent manipulated MV$_j$, and calculating the value of said proportional-integral-derivative controller PID$_{mj}$;

e) Sending the value of the proportional-integral-derivative controller, PID$_{mj}$ calculated in step d) as the (control signal) setpoint $u(t)$ to the technological process control system.

Preferably, a validation is performed of the values of dependent controlled variable CV$_i$ and/or independent manipulated MV$_j$, comprising for example a verification whether the values of said variables fall within process limits or whether their value has changed over time by an acceptable quantity.

In this variant, preferably, if any of the dependent controlled variable, CV$_i$ and/or independent manipulated MV$_j$ is found to exceed the limit, the values of said variables are reduced to the limit values set by the limits thereof.

In this case, preferably the reduction first involves the limit values determined by the limits of the value of the variable which has the highest value of the DTLR, Distance To Limit Ratio, coefficient.

Alternatively, the reduction preferably involves the limit values determined by the limits of the value of the variable which has the highest priority.

Preferably, for an independent manipulated variable, MV$_j$, a dependent controlled variable, CV$_n$ (n≥1) with the lowest value of the DTLR$_{CVi}$, Distance To Limit Ratio, coefficient is selected and its strategy is verified, and then:

i. If it is a strategy of the upper limit UP or of the lower limit DOWN, then this variable is selected as a dependent controlled variable, CV$_m$ (m=n) with its corresponding limit SP$_m$, setpoint, equal to the limit of this variable, CV$_{m\_limit}$ (m=n);

ii. If it is the between-limits strategy BETWEEN, another dependent controlled variable, CV$_p$ is sought, with the DTLR$_{CVp}$ coefficient (p≥1) value closest to DTLR$_{CVi}$ and having the strategy of the upper limit UP or of the lower limit DOWN, after which, based on this information and on the loop direction of the proportional-integral-derivative controller, PID$_{pj}$ corresponding to the dependent controlled variable, CV$_p$ and the independent manipulated variable, MV$_j$, the appropriate limit SP$_m$ (m=n) is selected for this dependent controlled variable of the BETWEEN CV$_m$ (m=n) type equal to:

• the upper limit of this variable - when

the dependent controlled variable, CV$_p$ has the strategy of the upper limit UP and the corresponding loop direction of the proportional-integral-derivative controller, PID$_{pj}$ is direct

or

the dependent controlled variable, CV$_p$ has the strategy of the lower limit DOWN and the corresponding direction of the loop direction of the proportional-integral-derivative controller, PID$_{pj}$ is reverse

- the lower limit of this variable - when

the dependent controlled variable, CV$_p$ has the strategy of the lower limit DOWN and the corresponding direction of the loop direction of the proportional-integral-derivative controller, PID$_{pj}$ is direct

or

the dependent controlled variable, CV$_p$ has the strategy of the upper limit UP and the corresponding loop direction of the proportional-integral-derivative controller, PID$_{pj}$ is reverse.

The control takes no action if the variable of the CV$_m$ type depends on a single MV$_j$. This is the simplest case: when only a single CV variable with the BETWEEN strategy is assigned to a given MV variable. The control works only when the CV value goes beyond the upper or lower limit, and if it is between them, the control takes no action. Hence the name of the type of the variable.

Here is an example explaining operations on the BETWEEN strategy variable: For a hypothetical control composed of one variable MV and two variables CV, i.e. CV1 dependent thereon (with the UP strategy) and CV2 (with the BETWEEN strategy): If the DTLR calculation identifies CV2 as the closest to the limit, without the verification of the optimisation directions of the other variables, the controller would only retain CV2 within the limits thereof. This would not be effective as it should move towards the upper limit of CV2. The described mechanism overcomes this problem.

Preferably, following step e), new values of dependent controlled variables, CV$_i$ and independent manipulated variables, MV$_j$ are read out, then steps b), c) and d) are repeated for them and the data of the ACS, Advanced Control System, dependency matrix is transferred.

Preferably, steps a) to e) are repeated, preferably at regular time intervals.

Preferably, values are retrieved and setpoints of variables are sent using the ACS, Advanced Control System, server, via the OPC (OLE for Process Control) server, which is a part of the DCS, Distributed Control System, industrial automation system.

Preferably, said technological process is controlled from a separate computer, preferably of a PC class.

Preferably, step e) is performed following prior validation of the setpoint (control signal) *u(t)*.

Preferably, the method according to the invention is used to control the cracked petrol desulfurization process.

The invention also comprises a product in the form of a computer program comprising instructions which, when executed by the computer, cause the computer to carry out the steps of the method as above.

**Preferred embodiments of the invention**

The invention will now be presented in greater detail in preferred embodiments, with reference to the accompanying drawings, in which:

Fig. 1 (prior art) shows MPC control concepts (https://en.wikipedia.org/wiki/Model_predictive_control),

Fig. 2 (prior art) shows a matrix of models in the MPC technique,

Fig. 3 (prior art) shows PID control concepts (https://en.wikipedia.org/wiki/PID_controller),

Fig. 4 shows a layered architecture of the industrial control system used in the present invention,

Fig. 5 is a schematic representation of the operation objective of advanced control systems, including of the present invention,

Fig. 6 shows the hardware architecture of the ACS solution according to the present invention,

Fig. 7 shows the general concept of operation of the ACS controller according to the present invention,

Fig. 8 shows a matrix of different PID controls in the ACS technology according to the present invention,

Fig. 9 (distributed across three sheets: 9a, 9b and 9c) shows a block diagram of the ACS controlling method according to the present invention,

Fig. 10 (screenshot) shows the main panel of the furnace control in an exemplary embodiment of the present invention in a Cracked Petrol Desulfurization (CPD) plant,

Fig. 11 (screenshot) shows the variables in the furnace control in this exemplary embodiment of the present invention,

Fig. 12 shows the operation of the present ACS invention in this exemplary embodiment: ensuring a stable furnace outlet temperature,

Fig. 13 shows the operation of the present ACS invention in this exemplary embodiment: ensuring optimised air volume to the furnace, taking into account current needs and constraints; a stabilisation of the readings of the oxygen level analyser in the flue gas;

Fig. 14 shows continuous regulation of fuel gas volume in order to maintain a constant temperature across the furnace,

Fig. 15 shows a major disturbance in the composition of the batch; the ACS controller correctly reduced the temperature across the furnace in order to ensure maximum acceptable upper limits of coil walls; the ACS controller autonomously reset the process to normal conditions as soon as the constraints allowed;

Fig. 16 shows that maximum temperatures of the furnace wall coils are maintained during a major disturbance - up to the upper limits.

## ACS control

The main innovation of the system is the combination of the advantages of a one-dimensional (single CV) PID controller for multidimensional system control (multiple CVs). Like all MPC solutions, the ACS controlling method according to the invention consists of a dependency matrix and an optimizer, but their role in the ACS is completely different compared to MPC. ACS also has its own control algorithm, which, for the purposes of the present description, is referred to as the *ACS Multivariable Controller.*

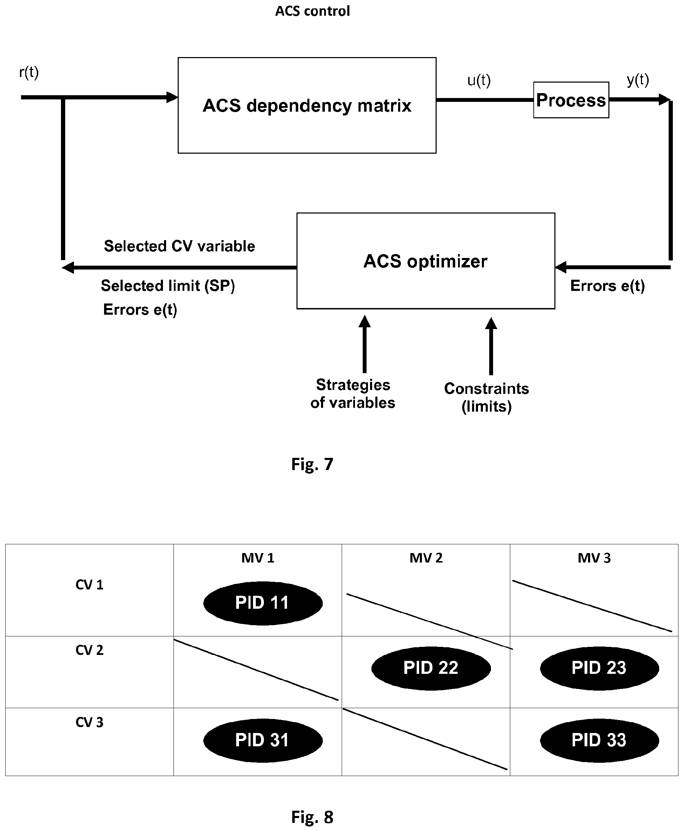

The general concept behind the operation of the ACS controller is as follows (Fig. 7):

- the system retrieves the current values of the variables CV and MV *r(t);*
- the system retrieves data from the ACS optimizer: for each MV the selected variable CV for control and its limit SP;
- the system calculates the control errors between the current value of the CV and the limit SP;
- the value of the PID control for the MV/CV pair selected by the optimizer is calculated based on the ACS dependence matrix,
- the calculated value is sent as a setpoint (to the DCS) as a control signal *u(t);*
- the system reads new values of variables CV and transfers them to the ACS optimizer;
- the ACS optimizer performs the selection of variable CV for PID control based on all constraints of the entire system (limits), strategies assigned to variables CV and the current differences between each CV and its limit SP, i.e. the control errors *e(t);*
- the ACS optimizer transfers the data to the ACS dependency matrix.

## ACS dependency matrix

Like the MPC, ACS uses a matrix of dependencies between MV and CV variables. However, this is a matrix of various PID controllers rather than models, as in the case of the MPC (Fig. 8). This is a uniquely new approach to advanced control method, characteristic of the present invention.

The ACS matrix contains the relationships between each pair of MVs and CVs. The relationships between each pair are written in the form of a separate PID controller. Thus, a specific PID controller "couples" a specific pair of controlled (CV) and manipulated (MV) variables. In each cycle (of 10 seconds by default), the ACS optimizer indicates for each MV variable a CV variable whose PID relationship is used to generate the control signal.

## ACS optimizer

The main component of the ACS controller is the optimizer which serves to control all CV variables within their limits and to optimize the operation of the system towards the optimal operation area. The ACS optimizer achieves this through the following:

- dynamic assignment to each variable MV of the appropriate CV together with the corresponding limit (SP);
- dynamic determination of the nearest constraints of the optimal operation point;
- dynamic responses to limits exceeding events.

Optimization directions are determined by the strategies assigned to each CV variable. Each CV variable can have exactly one of the following strategies:

- UP - maintain the value of the CV variable up to the upper limit; in this case the lower limit is insignificant and does not exist;
- DOWN - maintain the value of the CV variable up to the lower limit, in this case the upper limit is insignificant and does not exist;
- BETWEEN - maintain the CV variable between the upper and lower limits. If the value of this variable falls within these limits, take no action. If another CV variable with UP or DOWN strategy is assigned to the same MV variable, verify the direction of its PID loop (reverse or direct) and maintain the BETWEEN CV variable accordingly up to the upper or lower limit.

The basic measure of the ACS optimizer in determining the optimal operation point is the value of the coefficient referred to as DTLR (Distance To Limit Ratio) for the purposes of the present invention. It is the ratio of distance to a given limit in relation to that limit. This ratio indicates the value expressed as a percentage by which the value of the CV variable deviates from the limit at a given timepoint. The DTLR is expressed by the following formula:

$$DTLR_{CV} = \frac{|CV_{value} - CV_{limit}|}{CV_{limit}}$$

where:

DTLR$_{CV}$ - denotes the Distance To Limit Ratio value for a single CV$_i$ and the limit thereof;
CV$_{value}$ - denotes the current value of the CV variable;

CV $_{limit}$ - denotes the current value of the upper or lower limit for this CV.

**ACS Multivariable Controller block diagram**

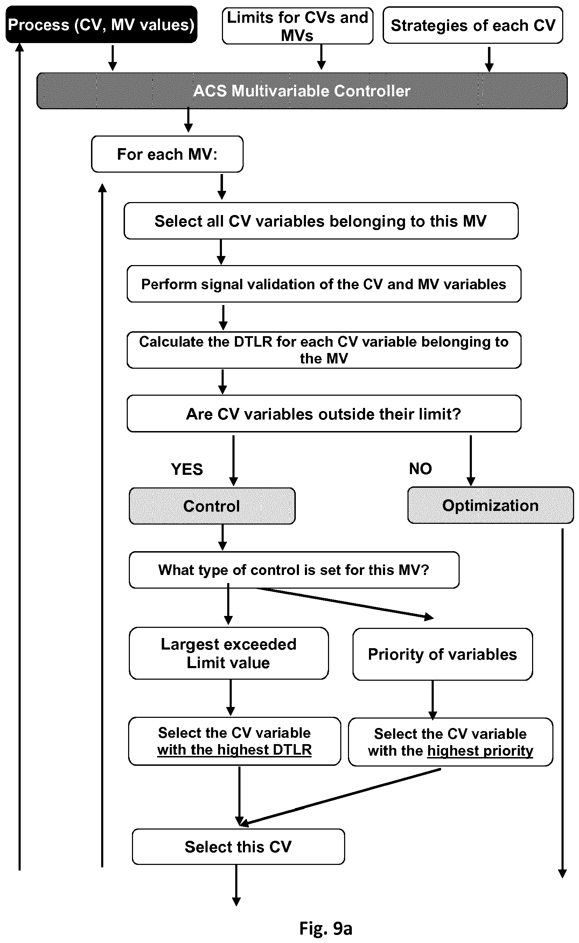

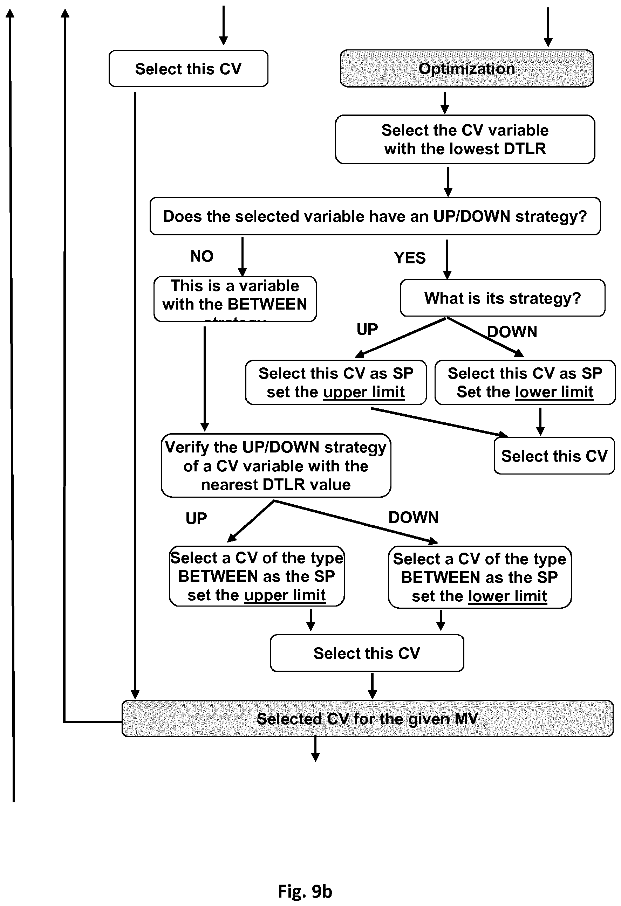

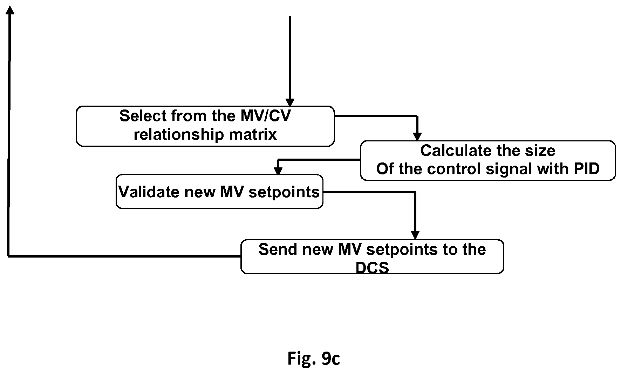

The general block diagram of ACS controller operation is discussed below (Fig. 9a, b, c). At input, values of process variables CV and MV, limits and strategy settings for each CV are retrieved. The CV variable is then selected with the respective SP for each MV.

This selection starts with the validation of values of the variables, which involves verifying whether they are consistent with the predetermined parameters (e.g. whether they are within process limits, or their value changed over time by the allowed size, etc.). DTLR parameters for each limit are calculated sequentially for each CV.

A check is then run for any exceeded limits. If there are any, the controller performs a control operation, that is to say it starts to reduce to the limits the variables that fell beyond their limits. There are two options to select the method of reducing the variables to the limit: choose as first to be reduced to the limit the CV variables with the largest exceeded value (the highest DTLR) or choose as first the variables with the highest set priority.

If all CV variables remain within their limits (or have been reduced to them), the ACS controller begins the optimization. It selects the CV variable with the lowest DTLR and verifies its strategy. If the strategy is an upper limit (UP) or lower limit (DOWN) strategy, this variable is selected. Its upper or lower limit is entered as its Setpoint. If the CV variable is a variable with a between-limits strategy (BETWEEN), the system searches for another CV with the nearest DTLR with an UP or DOWN strategy. Based on this information and on the direction of its loop (reverse or direct), the PID enters into the previously selected CV variable with the BETWEEN strategy as its Setpoint the upper or lower limit, respectively, of this previously selected CV variable.

Thus selected CV variable together with the appropriate Setpoint value is used to generate a control signal using control parameters from the ACS dependency matrix, that is to say the PID controller for the selected CV, which signal is sent to the DCS following validation. The ACS control loop is then performed for the next MV variable.

**Exemplary embodiment: control of the cracked petrol desulfurization (CPD) process and plant.**

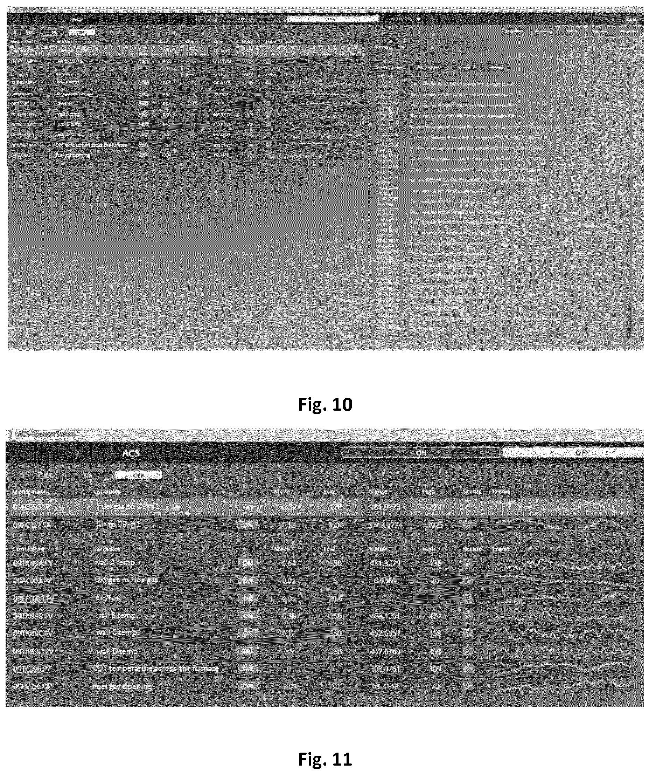

The ACS control system was implemented in a CPD (cracked petrol desulfurization) plant to control the furnace parameters. The system operated in full and continuously for about 1 week. The control panel consists of two manipulated variables MV and eight controlled variables CV (Fig. 10).

In this case, the variables are as follows (Fig. 11):

- The amount of fuel gas fed to the furnace 09-H1 - which is regulated depending on the following parameters:

  • furnace wall temperature A,
  • furnace wall temperature B,
  • furnace wall temperature C,
  • furnace wall temperature D,
  • temperature across the furnace,
  • opening of the heating gas valve,

- The amount of air fed to the furnace 09-H1 - which is regulated depending on the following parameters:

  • the amount of oxygen in the flue gas,
  • the ratio of the amount of the air fed to the furnace to the amount of fuel gas fed to the furnace.

Wall temperatures, the opening of the heating gas valve and the amount of oxygen in the flue gases have their upper and lower limits (the BETWEEN type strategy). The temperature across the furnace and the air/fuel ratio have strategies for the upper (UP) and lower (DOWN) limit, respectively.

The controller in this control system serves to maintain the furnace outlet temperature as constant as possible, which temperature affects the degree of desulfurization of petrol in the R3 reactor, while maintaining the temperature of furnace coil walls within safe limits. This is particularly important at the operation point shown, since, due to the final stage of life of the catalyst in R3 (poor catalyst activity - poorer exothermic reaction), the furnace needs to provide additional heat. The temperature of the walls is the constraint in this case.

The second task of the ACS controller is to continuously optimize gas consumption by reducing the amount of unnecessary air fed to the furnace, while maintaining the required minimum amount of oxygen in the flue gas (furnace operation safety) and of the air/fuel ratio, that is to say safe air excess due to cooling of the overheated coil walls of the furnace.

Thus, the ACS controller ensures operation within optimal technical limits, helping to ensure optimal reaction conditions in the R3 reactor in specific operating conditions. Major process disturbances that need handling by the ACS controller are as follows:

- variable value of fuel gas amount,
- variable composition of the charge.

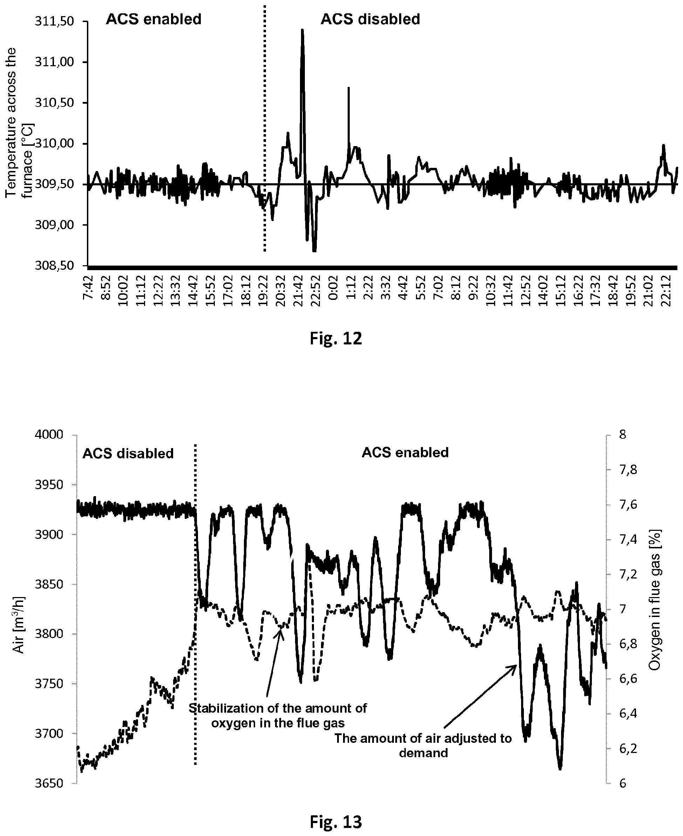

The disturbances are unlikely to persist; rather, the controller is forced to constantly change the MV setpoints in order to ensure that the CV variables are as constant as possible (Fig. 12).

The optimization of the amount of oxygen in the flue gas reduces the amount of fuel gas to the furnace (Fig. 13).

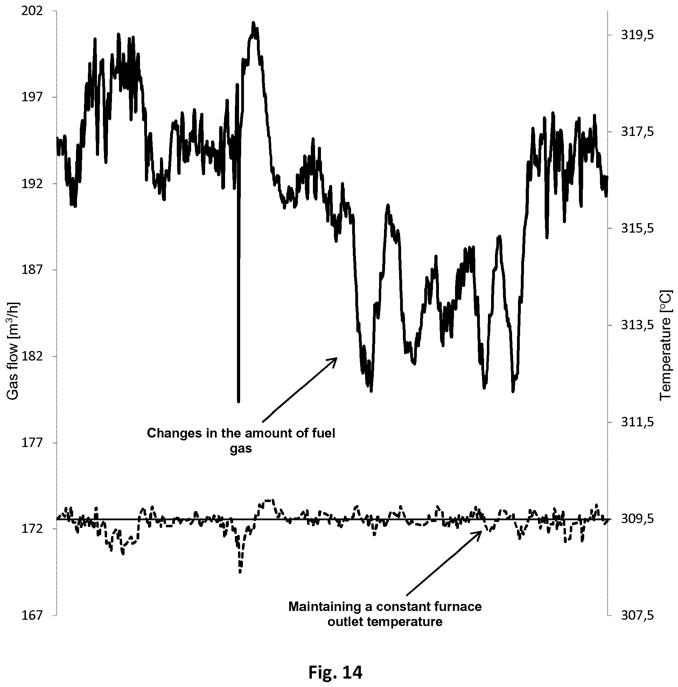

Every 10 seconds, the regulator makes decisions about changing the setpoints of MV variables, rejecting disturbances. It needs to constantly take action in order to maintain constant outlet temperature (Fig. 14). The area indicated in Fig. 14 shows in detail the number of movements to be performed by the CV in order to maintain the CV within its limit.

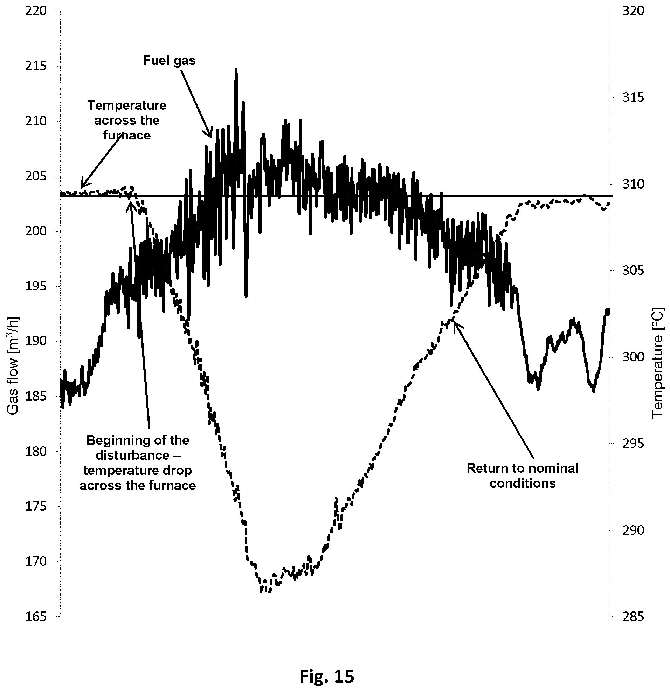

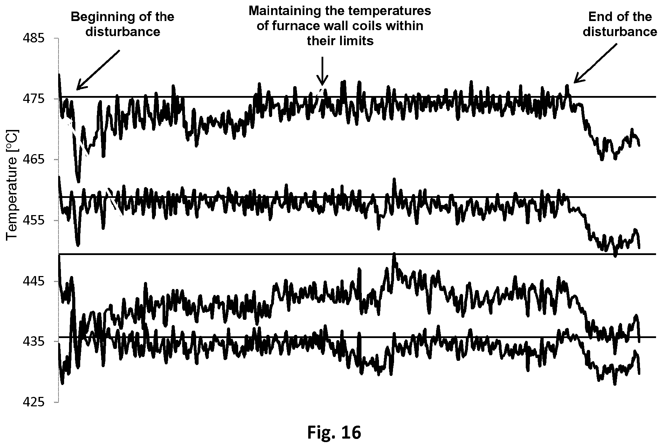

Some of these disturbances may be particularly large; an example of such a disturbance is shown in Fig. 15. In this case, the ACS controller was forced to reduce the furnace outlet temperature due to excessively high temperatures of the coil walls of the furnace. This was caused by a dramatic change in the composition of the batch and by changes in the calorific value of the fuel gas. The ACS controller took the appropriate measure by maintaining the operation of the furnace within the upper limits of wall temperatures, ensuring an optimal operating point, adding as much fuel gas as possible. As soon as the constraints allowed, the ACS controller, while always maintaining the highest possible wall temperatures, has autonomously reduced the temperature across the furnace to the nominal values - Fig. 16. During the disturbance, wall temperatures were at their maximum limits (Fig. 16).

## Summary

The ACS control method proposed in the present invention is much simpler compared to MPC, which requires complex, expensive in terms of calculations, matrix transformations for operation. Moreover, incorrectly defined models may prevent the calculations of the optimal state in the case of the MPC. The simplicity of the current ACS solution, although it does not guarantee optimal control, allows for very fast manufacture of efficient and stable controllers. This allows to retain the advantages of the MPC, such as multidimensional control taking into account multiple system limits, without the need to conduct complex calculations.

The ACS invention was implemented for test operation in a cracked petrol desulfurization plant for a period of one week. It was observed that its operation was proper and stable during this time. It turned out that an additional advantage was that an important load was taken off process operators (humans) since they had no longer to constantly enter setpoints manually or to take care for limits not to be exceeded.

The ACS control method proposed in the present invention is able to control CV variables falling beyond the limits in an ongoing manner and to constantly optimize the process towards the most profitable area of the controlled system operation. Accordingly, the process controlled by the ACS system provides additional tangible financial and process advantages.

## Claims

1. A method for controlling a technological process characterised by dependent controlled variables, $CV_i$ ($i \geq 1$), each of which depends on one or more independent manipulated variables, $MV_j$ ($j \geq 1$), with the relationships between each pair of $CV_i$ and $MV_j$ variables being included in the ACS, Advanced Control System, dependency matrix as separate proportional-integral-derivative controls $PID_{ij}$, including the following steps:

a) Retrieving the current $r(t)$ values, $r(t)$ being the desired process value or setpoint SP, of dependent controlled variables, $CV_i$ and independent manipulated variables, $MV_j$;

b) For each independent manipulated variable, $MV_j$, selecting a specific dependent controlled variable, $CV_m$ for control and limit $SP_m$ of said dependent controlled variable, $CV_m$, wherein in this step the following operations are performed:

b1) For each dependent controlled variable, $CV_i$ and independent manipulated variable, $MV_j$, their limits are retrieved from the limit database;

b2) For each dependent controlled variable $CV_i$ its strategy is retrieved from the strategy database, wherein the strategy may be one of the following three acceptable strategies:

i. An upper limit (UP) strategy, which consists in maintaining the value of the dependent controlled variable, $CV_i$ below or equal to the upper limit $CV_{i\_limit}$;
ii. A lower limit (DOWN) strategy, which consists in maintaining the value of the dependent controlled variable, $CV_i$ below or equal to the lower limit $CV_{i\_limit}$;
iii. A between-limit (BETWEEN) strategy, which consists in maintaining the value of the dependent controlled variable, $CV_i$ between the upper and lower limits;

b3) For each controlled variable, $CV_i$ and each limit thereof, the value of the $DTLR_{CVi}$, Distance To Limit Ratio, coefficient is calculated, defined as:

$$DTLR_{CVi} = \frac{|CV_i - CV_{i\_limit}|}{CV_{i\_limit}}$$

where:

$DTLR_{CVi}$ - the Distance To Limit Ratio DTLR value for a single dependent controlled variable $CV_i$ and the limit thereof $CV_{i\_limit}$;
$CV_i$ - denotes the current value of a sin-

gle dependent controlled variable $CV_i$; $CV_{i\_limit}$ - denotes the current value of the upper or lower limit for said dependent controlled variable, $CV_i$;

c) Calculating the adjustment deviation between the current value of the selected dependent controlled $CV_m$ and its limit $SP_m$;

d) Selecting from a ACS dependency matrix a proportional-integral-derivative controller, $PID_{mj}$ corresponding to the pair of variables selected in step b): dependent controlled $CV_m$ and independent manipulated $MV_j$, and calculating the value of said proportional-integral-derivative controller, $PID_{mj}$;

e) Sending the value of the proportional-integral-derivative controller, $PID_{mj}$ calculated in step d) as the (control signal) setpoint $u(t)$ to the technological process control system.

2. The method according to claim 1, wherein a validation is performed of the values of dependent controlled variable, $CV_j$ and/or independent manipulated $MV_j$, comprising for example a verification whether the values of said variables fall within process limits or whether their value has changed over time by the acceptable size.

3. The method according to claim 2, wherein if any of the dependent controlled variable, $CV_i$ and/or independent manipulated $MV_j$ is found to exceed the limit, the values of said variables are reduced to the limit values set by the limits thereof.

4. The method according to claim 3, wherein the reduction first involves the limit values determined by the limits of the value of the variable which has the highest value of the DTLR, Distance To Limit Ratio, coefficient.

5. The method according to claim 3, wherein the reduction preferably involves the limit values determined by the limits of the value of the variable which has the highest priority.

6. The method according to any of the claims 1 to 5, wherein for an independent manipulated variable, $MV_j$, a dependent controlled variable $CV_n$ ($n \geq 1$) with the lowest value of the $DTLR_{CVi}$, Distance To Limit Ratio, coefficient is selected and its strategy is verified, and then:

    i. If it is a strategy of the upper limit UP or of the lower limit DOWN, then this variable is selected as a dependent controlled variable, $CV_m$ ($m=n$) with its corresponding limit $SP_m$, setpoint, equal to the limit of this variable, $CV_{m\_limit}$ ($m=n$);
    ii. If it is the between-limits strategy BETWEEN, another dependent controlled variable, $CV_p$ is sought, with the $DTLR_{CVp}$ coefficient ($p \geq 1$) value closest to $DTLR_{CVi}$ and having the strategy of the upper limit UP or of the lower limit DOWN, after which, based on this information and on the loop direction of the proportional-integral-derivative controller, $PID_{pj}$ corresponding to the dependent controlled variable $CV_p$ and the independent manipulated variable $MV_j$, the appropriate limit $SP_m$ ($m=n$) is selected for this dependent controlled variable of the BETWEEN $CV_m$ ($m=n$) type equal to:

    • the upper limit of this variable - when

        the dependent controlled variable, $CV_p$ has the strategy of the upper limit UP and the corresponding loop direction of the proportional-integral-derivative controller $PID_{pj}$ is direct
        or
        the dependent controlled variable $CV_p$ has the strategy of the lower limit DOWN and the corresponding direction of the loop direction of the proportional-integral-derivative controller, $PID_{pj}$ is reverse

    • the lower limit of this variable - when

        the dependent controlled variable, $CV_p$ has the strategy of the lower limit DOWN and the corresponding direction of the loop direction of the proportional-integral-derivative controller, $PID_{pj}$ is direct
        or
        the dependent controlled variable, $CV_p$ has the strategy of the upper limit UP and the corresponding loop direction of the proportional-integral-derivative controller, $PID_{pj}$ is reverse.

7. The method according to any of the claims 1 to 6, wherein following step e), new values of dependent controlled variables $CVi$ and independent manipulated variables, $MV_j$ are read out, then steps b), c) and d) are repeated for them and the data of the ACS, Advanced Control System, dependency matrix is transferred.

8. The method according to any of the claims 1 to 7, wherein steps a) to e) are repeated, preferably at regular time intervals.

9. The method according to any of the claims 1 to 8, wherein values are retrieved and setpoints of variables are sent using the ACS, Advanced Control System server, via the OPC (OLE for Process Control) server, which is a part of the DCS, Distributed Control System, industrial automation system.

10. The method according to any of the claims 1 to 9, wherein the technological process is controlled from a separate computer, preferably of a PC class.

11. The method according to any of the claims 1 to 10, wherein step e) is performed following prior validation of the setpoint (control signal) *u(t)*.

12. The method according to any of the claims 1 to 11 involving control of cracked petrol desulfurization process.

13. A product in the form of a computer program comprising instructions which, when executed by the computer, cause the computer to carry out the steps of the method according to any of the claims 1 to 12.

**Patentansprüche**

1. Verfahren zur Regelung eines technologischen Prozesses, **gekennzeichnet durch** abhängige Regelgrößen $CV_i$ ($i \geq I$), von denen jede von einer oder mehreren unabhängigen Stellgrößen $MV_j$ ($j \geq 1$) abhängt, wobei die Beziehungen zwischen jedem Paar von $CV_i$ - und $MV_j$ -Variablen in der Abhängigkeitsmatrix ACS (Advanced Control System) als getrennte Proportional-Integral-Derivativ-Regelungen PIDij enthalten sind, umfassend die folgenden Schritten:

a) Abruf der aktuellen *r(t)*-Werte, wobei *r(t)* der gewünschte Prozesswert oder Sollwert SP ist, von abhängigen Regelgrößen CVi und unabhängigen Stellgrößen $MV_j$;
b) Für jede unabhängige Stellgröße $MV_j$ Auswahl einer spezifischen abhängigen Regelgröße $CV_m$ zur Regelung und Begrenzung $SP_m$ der abhängigen Regelgröße $CV_m$, **dadurch gekennzeichnet, dass** in diesem Schritt die folgenden Operationen durchgeführt werden:

b1) Für jede abhängige Regelgröße CVi und jede unabhängige Stellgröße $MV_j$ werden ihre Grenzwerte aus der Grenzwertdatenbank abgerufen;
b2) Für jede abhängige Regelgröße CVi wird ihre Strategie aus der Strategiedatenbank abgerufen, wobei die Strategie eine der folgenden drei akzeptablen Strategien sein kann:

i. Eine Strategie der oberen Grenze (UP), die darin besteht, den Wert der abhängigen Regelgröße CVi unter oder gleich der Obergrenze $CV_{i\_limit}$ zu halten;
ii. Eine Strategie der unteren Grenze (DOWN), die darin besteht, den Wert der abhängigen Regelgröße CVi unter oder gleich der unteren Grenze $CV_{i\,limit}$ zu halten;
iii. Eine Strategie der Zwischen-Grenze (BETWEEN), die darin besteht, den Wert der abhängigen Regelgröße CVi zwischen dem oberen und unteren Grenzwert zu halten;

b3) Für jede Regelgröße CVi und jeden ihrer Grenzwerte wird der Wert des Koeffizienten $DTLR_{cvi}$ (Distance To Limit Ratio) berechnet, der wie folgt definiert ist:

$$DTLR_{CV} = \frac{|CV_{value} - CV_{limit}|}{CV_{limit}}$$

wobei:

$DTLR_{cvi}$ - der DTLR-Wert (Distance To Limit Ratio) für eine einzelne abhängige Regelgröße CVi und deren Grenzwert $CV_{i\,limit}$ bezeichnet;
CVi - den aktuellen Wert einer einzelnen abhängigen Regelgröße CVi bezeichnet; $CV_{i\_limit}$ - den aktuellen Wert der Ober- oder Untergrenze für die genannte abhängige Regelgröße CVi bezeichnet;

c) Berechnung der Einstellabweichung zwischen dem aktuellen Wert der ausgewählten abhängigen Regelgröße $CV_m$ und ihrem Grenzwert $SP_m$;
d) Auswahl einer Proportional-Integral-Derivativ-Regelung $PID_{mj}$ aus einer ACS-Abhängigkeitsmatrix, der dem in Schritt b) ausgewählten Variablenpaar entspricht: abhängige Regelgröße $CV_m$ und unabhängige manipulierte Stellgröße $MV_j$, und Berechnung des Wertes der Proportional-Integral-Derivativ-Regelung $PID_{mj}$;
e) Senden des in Schritt d) berechneten Wertes der Proportional-Integral-Derivativ-Regelung $PID_{mj}$ als (Regelsignal-)Sollwert *u(t)* an das technologische Prozessleitsystem.

2. Verfahren nach Anspruch 1, bei dem eine Validierung der Werte der abhängigen Regelgröße $CV_j$ und/oder der unabhängigen Stellgröße $MV_j$ durchgeführt wird, die beispielsweise eine Überprüfung umfasst, ob die Werte der Variablen innerhalb der Prozessgrenzen liegen oder ob sich ihr Wert im Laufe der Zeit um die akzeptable Größe verändert hat.

**3.** Verfahren nach Anspruch 2, bei dem, wenn festgestellt wird, dass eine der abhängigen Regelgrößen CVi und/oder der unabhängigen Stellgröße MV$_j$ den Grenzwert überschreitet, die Werte dieser Größen auf die durch ihre Grenzwerte festgelegten Grenzwerte reduziert werden.

**4.** Verfahren nach Anspruch 3, wobei die Reduktion zunächst die Grenzwerte umfasst, die durch die Grenzen des Wertes der Variablen bestimmt werden, die den höchsten Wert des DTLR-Koeffizienten (Distance To Limit Ratio) aufweist.

**5.** Verfahren nach Anspruch 3, wobei die Reduzierung vorzugsweise die Grenzwerte umfasst, die durch die Grenzen des Wertes der Variablen mit der höchsten Priorität bestimmt werden.

**6.** Verfahren nach einem der Ansprüche 1 bis 5, wobei für eine unabhängige Stellgröße MV$_j$ eine abhängige Regelgröße CVn (n≥l) mit dem niedrigsten Wert des Koeffizienten DTLR$_{cvi}$ Distance To Limit Ratio ausgewählt und ihre Strategie überprüft wird, und dann:

   i. wenn es sich um eine Strategie des oberen Grenzwerts UP oder des unteren Grenzwerts DOWN handelt, wird diese Variable als abhängige Regelgröße CV$_m$ (m=n) mit ihrem entsprechenden Grenzwert SP$_m$, Sollwert, gleich dem Grenzwert dieser Variablen CVm_limit (m=n) ausgewählt;
   ii. Wenn es sich um die Zwischengrenzstrategie BETWEEN handelt, wird eine andere abhängige Regelgröße, CV$_P$ , gesucht, deren Koeffizient DTLRcvp (p>l) dem Wert DTLRcvi am nächsten liegt und die die Strategie der oberen Grenze UP oder der unteren Grenze DOWN hat, wonach, ausgehend von dieser Information und der Richtung des Regelkreises der Proportional-Integral-Derivativ-Regelung PI D$_{Pj}$, der der abhängigen Regelgröße CV$_P$ und der unabhängigen Stellgröße MV$_j$ entspricht, der geeignete Grenzwert SP$_m$ (m=n) für diese abhängige Regelgröße vom Typ BETWEEN CVm (m=n) gleich ausgewählt wird:

      - der gleich dem oberen Grenzwert dieser Größe ist - wenn

         die abhängige Regelgröße CV$_P$ die Strategie der oberen Grenze UP hat und die entsprechende Regelkreisrichtung der Proportional-Integral-Derivativ-Regelung PID$_{pj}$ direkt ist oder
         die abhängige Regelgröße CV$_P$ die Strategie der unteren Grenze DOWN hat und die entsprechende Richtung der Schleifenrichtung der Proportional-Integral-Derivativ-Regelung PID$_{P}j$ umgekehrt ist

      - der gleich dem unteren Grenzwert dieser Größe ist - wenn

         die abhängige Regelgröße CV$_P$ die Strategie der unteren Grenze DOWN hat und die entsprechende Richtung der Schleifenrichtung der Proportional-Integral-Derivativ-Regelung PID$_{P}j$ direkt ist oder
         die abhängige Regelgröße CV$_P$ die Strategie der oberen Grenze UP hat und die entsprechende Regelkreisrichtung der Proportional-Integral-Derivativ-Regelung PIDP$_{j\ umgekehrt\ ist}$·

**7.** Verfahren nach einem der Ansprüche 1 bis 6, wobei nach Schritt e) neue Werte der abhängigen Regelgrößen CVi und der unabhängigen Stellgrößen MV$_j$ ausgelesen werden, dann die Schritte b), c) und d) für diese wiederholt werden und die Daten der Abhängigkeitsmatrix ACS, Advanced Control System, übertragen werden.

**8.** Verfahren nach einem der Ansprüche 1 bis 7, wobei die Schritte a) bis e) wiederholt werden, vorzugsweise in regelmäßigen Zeitabständen.

**9.** Verfahren nach einem der Ansprüche 1 bis 8, bei dem Werte abgerufen und Sollwerte von Variablen unter Verwendung des ACS (Advanced Control System)-Servers über den OPC (OLE for Process Control)-Server, der Teil des DCS (Distributed Control System)-Industrieautomatisierungssystems ist, gesendet werden.

**10.** Verfahren nach einem der Ansprüche 1 bis 9, wobei der technologische Prozess von einem separaten Computer, vorzugsweise der PC-Klasse, gesteuert wird.

**11.** Verfahren nach einem der Ansprüche 1 bis 10, wobei Schritt e) nach vorheriger Validierung des Sollwerts (Steuersignals) *u(t)* durchgeführt wird.

**12.** Verfahren nach einem der Ansprüche 1 bis 11, bei dem der Entschwefelungsprozess von gecracktem Benzin gesteuert wird.

**13.** Produkt in Form eines Computerprogramms, das Befehle enthält, die, wenn sie von dem Computer ausgeführt werden, den Computer veranlassen, die Schritte des Verfahrens einem der Ansprüche 1 bis 12 auszuführen.

## Revendications

**1.** Un procédé pour commander un processus technologique, **caractérisé par** des variables commandées dépendantes, $CV_i$ ($i \geq I$), dont chacune dépend d'une ou plusieurs variables manipulées indépendantes, $MV_j$ ($j \geq I$), les relations entre chaque paire de variables $CV_i$ et $MV_j$ étant incluses dans la matrice de dépendance ACS, Advanced Control System, en tant que commandes proportionnelles-intégrales-dérivatives séparées PIDij, comprenant les étapes suivantes :

a) Récupérer les valeurs actuelles *r(t), r(t)* étant la valeur souhaitée du processus ou le point de consigne SP, des variables commandées dépendantes, CVi et des variables manipulées indépendantes, $MV_j$ ;
b) Pour chaque variable indépendante manipulée, $MV_j$, sélection d'une variable commandée dépendante spécifique, $CV_m$, pour la commande et la limite $SP_m$ de ladite variable commandée dépendante, $CV_m$, où dans cette étape les opérations suivantes sont effectuées :

b1) Pour chaque variable commandée dépendante, CVi et variable manipulée indépendante, $MV_j$, leurs limites sont récupérées dans la base de données des limites ;
b2) Pour chaque variable commandée dépendante CVi sa stratégie est récupérée dans la base de données des stratégies, la stratégie pouvant être l'une des trois stratégies acceptables suivantes :

i. Une stratégie de limite supérieure (UP) qui consiste à maintenir la valeur de la variable commandée dépendante, CVi inférieure ou égale à la limite supérieure $CV_{i\_limit}$ ;
ii. Une stratégie de limite inférieure (DOWN) qui consiste à maintenir la valeur de la variable commandée dépendante, CVi inférieure ou égale à la limite inférieure $CV_{i\_limit}$ ;
iii. Une stratégie entre limites (BETWEEN) qui consiste à maintenir la valeur de la variable commandée dépendante, CVi entre les limites supérieure et inférieure ;

b3) Pour chaque variable commandée, CVi et chaque limite de celle-ci, on calcule la valeur du coefficient $DTLR_{cvi}$, Distance To Limit Ratio, défini comme suit :

$$DTLR_{CV} = \frac{|CV_{value} - CV_{limit}|}{CV_{limit}}$$

où :

$DTLR_{cvi}$ - la valeur DTLR (Distance To Limit Ratio) pour une seule variable commandée dépendante CVi et sa limite $CV_{i\_limit}$ ;
CVi - représente la valeur actuelle d'une seule variable commandée dépendante $CV_i$; $CV_{i\_limit}$-représente la valeur actuelle de la limite supérieure ou inférieure de ladite variable commandée dépendante, CVi ;

c) Calcul de l'écart de réglage entre la valeur actuelle de la variable commandée dépendante sélectionnée $CV_m$ et sa limite $SP_m$ ;
d) Sélection, à partir d'une matrice de dépendance ACS, d'un régulateur proportionnel-intégral-dérivé, $PID_{mj}$ correspondant à la paire de variables sélectionnées à l'étape b) : variable commandée dépendante $CV_m$ et variable manipulée indépendante $MV_j$, et calcul de la valeur dudit régulateur proportionnel-intégral-dérivé, $PID_{mj}$;
e) Envoi de la valeur du régulateur proportionnel-intégral-dérivé, $PID_{mj}$ calculée à l'étape d) en tant que point de consigne (signal de commande) *u(t)* au système de commande du processus technologique.

**2.** Le procédé selon la revendication 1, dans lequel on effectue une validation des valeurs de la variable commandée dépendante, $CV_j$ et/ou de la variable manipulée indépendante $MV_j$, comprenant par exemple une vérification si les valeurs desdites variables se situent dans les limites du procédé ou si leur valeur a changé au cours du temps par la taille acceptable.

**3.** Le procédé selon la revendication 2, dans lequel si l'une quelconque de la variable commandée dépendante, CVi et/ou de la variable indépendante manipulée $MV_j$ se trouve dépasser la limite, les valeurs desdites variables sont réduites aux valeurs limites fixées par les limites de celles-ci.

**4.** Le procédé selon la revendication 3, dans lequel la réduction concerne d'abord les valeurs limites déterminées par les limites de la valeur de la variable qui a la valeur la plus élevée du coefficient DTLR, Distance To Limit Ratio.

**5.** Le procédé selon la revendication 3, dans lequel la réduction concerne de préférence les valeurs limites déterminées par les limites de la valeur de la variable qui a la priorité la plus élevée.

**6.** Le procédé selon l'une quelconque des revendications 1 à 5, dans lequel pour une variable manipulée indépendante, $MV_j$, on sélectionne une variable commandée dépendante $CV_n$ ($n \geq l$) ayant la plus faible valeur du coefficient $DTLR_{cvi}$ (Distance To Limit Ratio), et on vérifie sa stratégie, puis :

> i. S'il s'agit d'une stratégie de la limite supérieure UP ou de la limite inférieure DOWN, alors cette variable est sélectionnée comme variable commandée dépendante, $CV_m$ (m=n) avec sa limite correspondante $SP_m$, point de consigne, égale à la limite de cette variable, $CV_{m\_limit}$ (m=n) ;
> ii. S'il s'agit de la stratégie entre limites BETWEEN, on recherche une autre variable commandée dépendante, $CV_P$, avec la valeur du coefficient DTLRcvp (p>l) la plus proche de DTLRcvi et ayant la stratégie de la limite supérieure UP ou de la limite inférieure DOWN, après quoi, sur la base de cette information et du sens de la boucle du régulateur proportionnel-intégral-dérivé, $PI D_{Pj}$ correspondant à la variable commandée dépendante $CV_P$ et à la variable manipulée indépendante $MV_j$, on choisit la limite appropriée $SP_m$ (m=n) pour cette variable commandée dépendante du type BETWEEN $CV_m$ (m=n) égale à :

>> • la limite supérieure de cette variable - quand

>>> la variable commandée dépendante, $CV_P$ a la stratégie de la limite supérieure UP et la direction de boucle correspondante du régulateur proportionnel-intégral-dérivé $PID_{Pj}$ est directe ou
>>> la variable commandée dépendante, $CV_P$ a la stratégie de la limite inférieure DOWN et la direction de boucle correspondante du régulateur proportionnel-intégral-dérivé $PID_{Pj}$ est inversée

>> • la limite inférieure de cette variable - quand

>>> la variable commandée dépendante, $CV_P$ a la stratégie de la limite inférieure DOWN et la direction de boucle correspondante du régulateur proportionnel-intégral-dérivé $PID_{Pj}$ est directe ou
>>> la variable commandée dépendante, $CV_P$ a la stratégie de la limite supérieure UP et la direction de boucle correspondante du régulateur proportionnel-intégral-dérivé $PID_{Pj}$ est inversée.

**7.** Le procédé selon l'une quelconque des revendications 1 à 6, dans lequel, à la suite de l'étape e), de nouvelles valeurs des variables commandées dépendantes CVi et des variables manipulées indépendantes, $MV_j$ sont lues, puis les étapes b), c) et d) sont répétées pour celles-ci et les données de la matrice de dépendance de l'ACS, Advanced Control System, sont transférées.

**8.** Le procédé selon l'une quelconque des revendications 1 à 7, dans lequel les étapes a) à e) sont répétées, de préférence à intervalles réguliers.

**9.** Le procédé selon l'une quelconque des revendications 1 à 8, dans lequel les valeurs sont récupérées et les points de consigne des variables sont envoyés en utilisant le serveur ACS, Advanced Control System, via le serveur OPC (OLE for Process Control), qui fait partie du système d'automatisation industrielle DCS, Distributed Control System.

**10.** Le procédé selon l'une quelconque des revendications 1 à 9, dans lequel le processus technologique est commandé à partir d'un ordinateur séparé, de préférence d'une classe PC.

**11.** Le procédé selon l'une quelconque des revendications 1 à 10, dans lequel l'étape e) est effectuée après une validation préalable du point de consigne (signal de commande) *u(t)*.

**12.** Le procédé selon l'une quelconque des revendications 1 à 11 impliquant la commande du processus de désulfuration de l'essence craquée.

**13.** Un produit sous la forme d'un programme informatique comprenant des instructions qui, lorsqu'elles sont exécutées par l'ordinateur, amènent l'ordinateur à réaliser les étapes du procédé selon l'une quelconque des revendications 1 à 12.

**Fig. 1 (prior art)**

| | MV 1 | MV 2 | MV 3 |
|---|---|---|---|
| CV 1 | | | |
| CV 2 | | | |
| CV 3 | | | |

**Fig. 2 (prior art)**

EP 3 683 634 B1

Fig. 3 (prior art)

Fig. 4

Fig. 5

Fig. 6

ACS control

Fig. 7

| | MV 1 | MV 2 | MV 3 |
|---|---|---|---|
| CV 1 | PID 11 | | |
| CV 2 | | PID 22 | PID 23 |
| CV 3 | PID 31 | | PID 33 |

Fig. 8

Process (CV, MV values)

Limits for CVs and MVs

Strategies of each CV

ACS Multivariable Controller

For each MV:

Select all CV variables belonging to this MV

Perform signal validation of the CV and MV variables

Calculate the DTLR for each CV variable belonging to the MV

Are CV variables outside their limit?

YES

NO

Control

Optimization

What type of control is set for this MV?

Largest exceeded Limit value

Priority of variables

Select the CV variable with the highest DTLR

Select the CV variable with the highest priority

Select this CV

Fig. 9a

18

Select this CV

Optimization

Select the CV variable
with the lowest DTLR

Does the selected variable have an UP/DOWN strategy?

NO

This is a variable
with the BETWEEN

YES

What is its strategy?

UP

DOWN

Select this CV as SP
set the upper limit

Select this CV as SP
Set the lower limit

Select this CV

Verify the UP/DOWN strategy
of a CV variable with the
nearest DTLR value

UP

DOWN

Select a CV of the type
BETWEEN as the SP
set the upper limit

Select a CV of the type
BETWEEN as the SP
set the lower limit

Select this CV

Selected CV for the given MV

Fig. 9b

**Fig. 9c**

# EP 3 683 634 B1

**Fig. 10**

**Fig. 11**

**Fig. 12**

**Fig. 13**

Fig. 14

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5572420 A
- US 5351184 A
- US 20180143595 A1
- US 20070073422 A1